# EUROPEAN PATENT APPLICATION

(11) **EP 4 659 894 A1**
(43) Date of publication of application: **10.12.2025**
(21) Application number: 24179537.6
(22) Date of filing: 03.06.2024
(51) Int. Cl.: B23Q 1/54, B25J 9/00

(54) **PARALLEL KINEMATICAL MACHINE**

(71) Applicant: Neos Robotics Pte. Ltd., Singapore 038987 (SG)
(72) Inventor: Neumann, Karl-Erik, DUBAI (AE)
(74) Representative: Groth & Co. KB

(57) **Abstract**

The disclosure pertains to a frameless parallel kinematic machine (1) comprising a positioning platform (10) with a tool head (26) that is both rotatable and pivotable relative to the positioning platform. First, second, and third setting devices (2a-2c) are featured, each with a reinforcing beam (8) and a mechanism (12) for individual extension and retraction along the corresponding setting device's longitudinal direction (a). Each setting device is connected to the positioning platform (10) in a manner that allows one-degree freedom of rotation, forming a tripod design. The machine also includes first and third universal gimbal joints (4a, 4b) and a second universal gimbal joint (6). These joints comprise various elements including outer bearings (16, 20), inner bearings (34, 42), gimbal holders (18, 22, 36a, 36b), a gimbal element (38), hub bearings (48), and a hub (44). The second setting device (2b) is connected to the hub (44) via the hub bearings (48), with the hub axis (48') oriented at an angle α to the second inner gimbal axis (42').

## Description

### Technical Field

The invention relates to the field of parallel kinematical machines in particular it relates to an improved parallel kinematical machine, which can be used for various tasks and working ranges without compromising on stiffness and cycle time.

### Background of the Invention

Parallel kinematical machines are used in many applications one of them is industrial machining or milling of metals or other materials. For example, the EV-industry uses large amounts of aluminum profiles and castings in the Body In White (BIW), said profiles and castings are also used to embed batteries, motors and other components of electric vehicles. These aluminum profiles and castings need to be machined with high precision and with short cycle times. What typically plays against precision and short cycle times is high inertia and low stiffness in the parallel kinematic machine and/or high weight, which leads to high inertia, in the parts that have comparably large movement ranges over the working areas. Such high inertia increases cycle times due to physical limits. It is a constant aim to improve stiffness and lower inertia of such parallel-kinematic machines in order to improve precision and increase speed of treatment and therewith reduce cycle times.

A parallel kinematic machine (PKM) is described in WO2011/159225 A1. The WO2011/159225 A1 describes a PKM having three setting devices that can be lengthened and shortened individually to move a positioning head within a working range. Each setting device is connected to a respective inner gimbal ring of universal gimbal joints. The first and third inner gimbal rings, are mounted for rotation in a common outer gimbal holder, while the second inner gimbal ring is mounted for rotation in a single gimbal holder. The rotation axis of the single gimbal holder is not aligned with the common gimbal axis. In order to avoid kinematic locking of the PKM according to WO 2011/159225 A1, it further describes the possibility of an axial rotation of a second setting device and reinforcing beam. This is in particular described on page 5 of the WO 2011/159225 A1 publication in the first paragraph, where it is stated that the beam bearing of at least one reinforcing beam is slightly rotatable about its own longitudinal axis or about an axis in its gimbal holder parallel with said longitudinal axis. The WO 2011/159225 A1 does however not explain such a bearing of the setting device and beam bearing in detail.

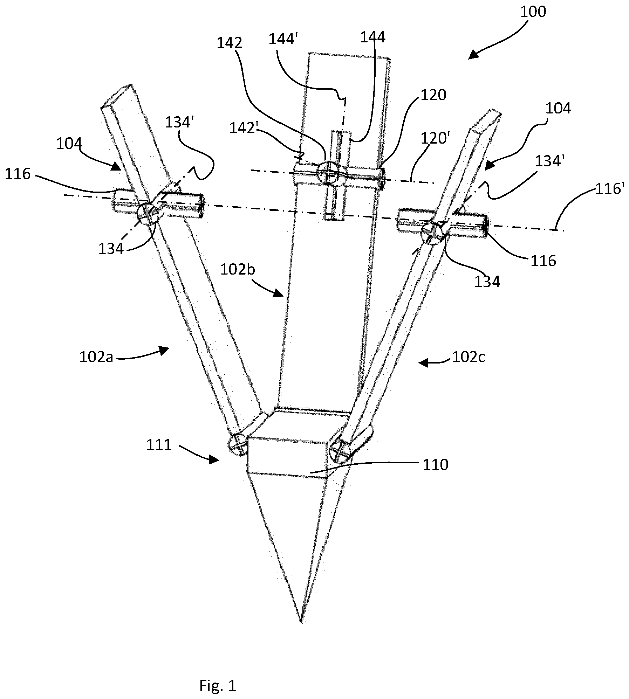

The need for such a special designed bearing or embedding is also explained with reference to figure 1.

Another prior art disclosure that tackles the above-mentioned need to provide a linear bearing for the reinforcing beam and a bearing for the setting device that is at least slightly rotatable, is described in WO 2006/054935 A1. WO 2006/054935 A1 describes a machine that includes at least three setting devices which can be lengthened and shortened individually. Each setting device is connected to a positioning head via a joint, and to a base or frame via a universal joint. The positioning head is movable within a working range in response to the maneuvering of the setting devices. Figs. 4 and 5 of WO 2006/054935 A1 illustrate a setting device in combination with two reinforcing beams. The inner gyro element of the universal joint includes a first and a second gyro window through which the two reinforcing beams each extend parallel with one another. Each reinforcing beam is connected to the inner gyro element via two tilt elements, enabling the reinforcing beams to rotate about an axis parallel with their own symmetrical longitudinal axis. The joint that allows rotation around a longitudinal axis of the reinforcing beams is rather complicated and involves a lot of movable parts. It also needs to be manufactured specifically with high stiffness and very low tolerances to reduce play and therewith increase stiffness of the entire machine. This is however not always possible and therewith the machine described in WO 2006/054935 A1 has its limitations in terms of stiffness, rigidity and simplicity of manufacturing. In addition, these machines according to the prior art typically cannot absorb lateral forces and/or torsional forces with at least one of their setting device and reinforcing beam combination, which are typically the ones that are designed to be slightly rotatable about their longitudinal axis. These setting devices and reinforcing beam combinations can normally only absorb forces along their longitudinal direction. As one can imagine this reduces stiffness and rigidity of the entire parallel kinematic machine.

Another parallel kinematic machine is illustrated in EP 1 676 036 B1, which describes a joint design referring to figures 2 to 13. The parallel kinematic machine according to the EP 1 676 036 B1 includes a setting device that moves a positioning head in space. The setting device is mounted around a wobbler for rotation about a wobbler axis. The wobbler is in turn mounted for rotation about a main axis that extends through setting-device bearing means around the wobbler. The joint is disposed between the setting device and the positioning head or, alternatively, between the setting device and/or a frame. One end of the setting device is mounted for rotation about the wobbler which, in turn, is rotatably mounted to the positioning head and/or the frame for rotation about the main axis. The wobbler axis and the main axis mutually intersect at an angle α, where 1° ≤ α ≤ 45°. The wobbler joint of EP 1 676 036 B1 is however not adapted for more complex and automated parallel kinematic machines, especially for kinematic machines that require high rigidity or stiffness for very high precision and low inertia of the parts that move the furthest distance when a workpiece is treated. It also requires a central tube in the setting device to lateral and torsional forces, which in turn limits its capability. In addition, in EP 1 676 036 B1 all three universal gimbal joints are embedded individually, which decreases rigidity and stiffness and also increases manufacturing costs.

In view of the previous there is a need to further improve state of the art parallel kinematic machines.

### Summary of the Invention

In view of the above it is an object of the present invention to provide a parallel kinematic machine that is very precise, robust and allows highly efficient treatment of workpieces while enabling an economic manufacturing.

Another object of the present invention relates to the provision of a highly flexible and versatile parallel kinematic machine.

The inventor of the present invention has realized that it is possible to provide a frameless parallel kinematic machine with an improved second universal gimbal joint using an inclined axle that is rotatably embedded at an angle in an inner gimbal element, whereby the axle is used to hold one of the setting devices and one of the reinforcing beams. Such a second universal gimbal joint design improves the possibility to absorb torsional forces and lateral forces in a direction perpendicular to the longitudinal extension of the axle, in addition to the absorption of forces along the longitudinal direction of the setting device and the reinforcing beam, respectively. The inventor has further realized that such a second universal gimbal joint still allows to embed the first and third universal gimbal joint in a common outer gimbal holder for improved stiffness and simplicity of construction. Such a frameless parallel kinematic machine has several advantages: A first advantage being that a distance between an outer rotation axis of the common outer gimbal holder and an outer rotation axis of the second universal gimbal joint can be chosen as required due to the frameless design. This is further explained referring to the embodiments of the invention below. A second advantage concerns the improved and simplified design of the second universal gimbal joint compared to the prior art. Using an inclined axle that is rotatably mounted in an inner gimbal element for mounting the setting device and the reinforcing beam of the second universal gimbal joint, improves stiffness, rigidity and therewith precision. At the same time the solution does not compromise on the advantages of the prior art of having a substantially lightweight design to reduce inertia, especially for the parts close to the positioning platform, as these parts typically travel the longest distances during treatment of a work piece. A lower inertia (lightweight) improves movement speed of the positioning platform and therewith allows for higher efficiency.

Disclosed herein is a frameless parallel kinematic machine incorporates first, second, and third setting devices. Each of these devices comprises of a mechanism for extending and retracting the setting device along its longitudinal direction. All three setting devices are connected to the positioning platform on one end in a manner that allows one-degree freedom rotation, culminating in a tripod design. The parallel kinematic machine also includes first and third universal gimbal joints that share a common outer gimbal holder having outer bearings, inner bearings, as well as first and third inner gimbal holders. In this setup, the outer bearings are embedded within the common outer gimbal holder which defines the first outer gimbal axis. The first and third inner gimbal holders are individually embedded within the common outer gimbal holder via their inner bearings. These define parallel first and third inner gimbal axes oriented perpendicularly relative to the first outer gimbal axis. The first and third inner gimbal elements are designed to hold their corresponding setting devices. The parallel kinematic machine further comprises a second universal gimbal joint. The second universal gimbal joint comprises outer bearings, a gimbal holder, inner bearings, a gimbal element, hub bearings and a hub. The outer bearings are embedded in the gimbal holder defining a second outer gimbal axis. The inner bearings are embedded in the gimbal holder defining a second inner gimbal axis oriented perpendicular to the second outer gimbal axis. The hub is connected to the gimbal element via the inner bearings. The hub comprises the hub bearings and the hub is designed so that the hub bearings define a hub axis that is oriented at an angle α to the second inner gimbal axis and wherein the second setting device is connected to the hub via the hub bearings.

The hub therewith enables a precession movement of the second setting device upon rotation of the second setting device around the second inner gimbal axis.

A frameless parallel kinematic machine according to the above embodiment has the advantage the stiffness, rigidity and therewith precision is highly improved. In addition, due to the stiffness and the option to use lightweight components, cycle times can be substantially reduced.

In an embodiment each of the first-, second-, and third setting devices comprises a linear bearing and a reinforcing beam designed to slide in the linear bearing.

These further increases stiffness and rigidity of the frameless parallel kinematic machine. and increases the range of motion of the positioning head of the frameless parallel kinematic machine.

Further, avoiding a frame structure thus frameless or a similar structure increases flexibility when installing and using the frameless kinematic machine.

In embodiments a maximum value of the angle α may be chosen to be 1° < α < 45°, preferably 10° < α < 20°.

Moreover, during operation of this parallel kinematic machine, intersection between hub axis and second inner gimbal axis occurs at points corresponding to tilting points along the longitudinal direction of the second setting device.

In an embodiment the gimbal element may be designed as gimbal ring embedded in the gimbal holder.

In an embodiment the gimbal holder is designed as gimbal ring comprising a pair of circular holes that align with one another as seen along the second inner gimbal axis, said circular holes being designed to embed the inner bearings and therewith the gimbal element and/or gimbal ring.

In still another embodiment the inner bearings of the second universal gimbal joint are designed as a pair of inner bearings.

The machine also includes mechanisms for extending and retracting individual setting devices which could be motorized screw-nut mechanisms or e.g. direct drive linear motors.

Furthermore, hubs used in this setup could be asymmetric hubs when combined with relevant bearing elements, such as the inner bearings and the hub bearings. Such asymmetric hubs then define two distinct axes of rotation; one corresponding to the second inner gimbal axis while the other corresponding to hub's own rotational or axial alignment and thus the hub axis. Such a configuration basically allows the precession movement of the second setting device.

In an embodiment the hub may be designed as a pair of hubs comprising a pair of hub bearings, the pair of hubs being embedded in the gimbal element and configured to hold the second setting device and the second linear bearing between the pair of hubs.

In an embodiment the gimbal element and the hub may be integrally formed as an asymmetric hub sleeve embedded in the gimbal holder. The hub bearings may be embedded in the asymmetric hub sleeve.

The asymmetric hub sleeve may be designed as a Z-shaped asymmetric hub sleeve.

The above-described design of the asymmetric hub sleeve increases precision and stiffness in the frameless parallel kinematic machine.

In still another embodiment of the frameless kinematic machine, whereby in an initial position, in which the first, second and third setting device have a similar or same length, the second inner gimbal axis forms an acute angle β with the longitudinal axis a of the second setting device, on a side of the second setting device on which the positioning platform is connected to the second setting device.

The above feature reduces the precession movement or rotation of the hub axis and thereby increases stiffness and rigidity and increases speed and acceleration at the same time.

In another embodiment materials selected for construction may play a role in performance characteristics of such a frameless kinematic machine. For instance, components like gimbal holders (both common and individual), gimbal elements, hubs, and could be made from strong rigid materials such as aluminum, steel, iron or cast iron or any suitable alloy. This ensures durability and robustness in operations.

On the other hand, certain parts of setting devices including reinforcing beams may be made from carbon fiber composite material. This offers advantages like high strength-to-weight ratio contributing towards overall efficiency in operation and low inertia for elements that typically have a higher range of motion over a workpiece.

In other embodiments, the hub bearings may be designed as a pair of hub bearings to further increase stiffness and precision.

In some designs, hubs may be formed as pairs of axles while the gimbal element may be a pair of discs embedded in or on the gimbal holder. Each disc in this setup would include at least one inclined recess for receiving hub bearing embedding one axle from the pair, while the second setting device and the linear bearing are arranged in between the pair of axles.

This detailed description provides an overview of a frameless parallel kinematic machine that is designed to offer flexibility in operation while maintaining structural robustness and operational efficiency.

### Definition of terms used herein:

In this disclosure certain terms and technical specifications will be used, some of them are explained referring to the figures and some of them are herewith explained and specified for optimal understanding of the described invention.

### Frameless Parallel Kinematic Machine:

A frameless Parallel Kinematic Machine (PKM) is a type of mechanical system which follows the principles of parallel robotics. This term is used to describe a machine that has no need of a rigid structure to hold its various components, such as a positioning platform and setting devices, together. Instead, these components are interconnected in a manner which allows them to move relative to one another in multiple degrees of freedom, typically in all three axis of a coordinate system, namely x-axis, y-axis and z-axis. The frameless parallel kinematic machine disclosed herein is designed as a tripod. The frameless parallel kinematic machine can be mounted to a base via holders that hold a first outer gimbal axis and a second outer gimbal axis. The lack of a frame allows for increased flexibility and adaptability in the machine's movements. Having no frame means that a distance between a first outer gimbal axis and a second outer gimbal axis can be changed depending on the base that is used to mount the frameless parallel kinematic machine. A higher distance increases thereby stiffness compromising on reach (x-, y- and z-axis) while a lower distance increases reach at the cost of stiffness.

Similarly, the distance between the inner gimbal axes of the first and third universal gimbal joint may be changed by exchanging the common outer gimbal holder. Increasing the distance may thereby also lead to increased stiffness while decreasing the distance will lead to higher range.

### Positioning Platform and Tool Head:

A positioning platform in the context of a frameless PKM refers to a movable stage or surface which is designed to carry a tool head and a corresponding drive and adapters for a power source to drive a tool. The tool head attached to the positioning platform is the part of the machine that performs the actual work, like cutting, drilling, milling, etc. In the context herein, the tool head can be both rotatable, pivotable and include multiple additional axis relative to the positioning platform. This means that it can move in two different ways: it can spin in place around an axis (rotation), and it can move back and forth or side to side (pivoting), as well as carrying multiple additional axis of freedom and tools.

### (first, second and/or third) Setting Device:

The setting devices in the context of a frameless PKM are used to control the position and partially orientation of the positioning platform. In the provided claims, there are three setting devices, each comprising a reinforcing beam and a mechanism for extending and retracting the setting device along its longitudinal direction. Each setting device connects to the positioning platform in a manner that allows for one degree of freedom in rotation across the setting devices, forming a tripod design. This allows for precise control over the movements of the positioning platform and the attached tool head, while providing high precision and short cycle times.

### Universal Gimbal Joints:

Universal gimbal joints are used to provide two degrees of freedom in rotation across the setting devices. In the context of a frameless PKM, universal gimbal joints are typically joints having a first gimbal element or gimbal ring making use of typically a pair of bearings for rotation around a first gimbal axis (herein called outer gimbal axis) while the second gimbal element or gimbal ring is embedded in the first gimbal element also via typically a pair of bearings for rotation around a second gimbal axis (herein called inner gimbal axis). Typically, the first gimbal axis and the second gimbal axis are oriented perpendicular to one another. All three gimbal joints described herein make use of the described principle. The first and third universal gimbal joints are in the shown embodiments embedded in a common outer gimbal holder, whereby inner gimbal rings that include linear bearings for the setting devices and the reinforcing beams, respectively, are embedded via bearings in the common outer gimbal holder. The second universal gimbal joint is individually designed not having common outer gimbal holders. This arrangement allows for the setting devices to extend and retract along their longitudinal direction and thereby move the positioning platform over a work piece in a work area or workspace.

### Second Universal Gimbal Joint:

The second universal gimbal joint operates differently from the first and third universal gimbal joints. It comprises outer bearings, a gimbal holder, inner bearings, a linear bearing, a gimbal element, hub bearings, and a hub. The gimbal element and hub are connected such that the hub axis is oriented at an angle α relative to the inner gimbal axis. This configuration allows for additional degree of freedom, namely a third degree of freedom as in the rotation of the second setting device relative its longitudinal direction. This rotation is herein called tilting.

### Axis versus axle:

Herein the term axis describes a virtual line defined by a bearing, which enables rotation of a component around or along said bearing. The term axle however refers to a physical element such as cylindrical shaped component, for example a shaft or pipe-shaped component. Also, if it is herein mentioned that the axle comprises or interacts with a bearing such a bearing may be arranged at either end or in the middle of such an axle. In here many axis are defined and they are clearly identified with reference to the figures.

### Embedding:

Embedding or embedded herein means that the bearings can be embedded in, on or around other elements named herein, such as the hub or hubs, the gimbal element or elements and the gimbal rings. Bearings herein may be arranged around a component on one side and within another component on the other side, typically fitting into a bushing or bearing shell. Further, as it is clear to the skilled person the position of bearing shells or bushings may be exchanged as suitable so that such outer and inner bushings may be switched if the component allows such a switch. All these variations and solutions are herewith covered in this disclosure. The term embedding or embedded may further be replaced with arrange, arranged or positioned.

### Bearings - element interaction:

As explained above bearings are meant to comprise the actual bearings and herein also include bushings or bearing shells corresponding and fitting with the bearings if not explicitly described in another configuration. Bearings herein may include ball bearings, roller bearings, plain bearings, flexure bearings, needle bearings, fluid bearings, magnet bearings or cylinder bearings.

### Hub and hub bearings, asymmetric hub:

Hub and hub bearings herein may be understood very similarly to an axle as explained above, however, a hub as described herein typically interacts with two bearings or a pair of bearings, which may also be true for an axle as described above. In that sense the term hub may include a solid object or a hollow object that is at least partially rotationally symmetric. In particular however, an asymmetric hub may include a pair of bearings wherein one side of the hub interacts with the first bearing while the other side interacts with the other side of the hub, while the asymmetric hub is designed to thereby define a first rotational axis via the first bearing and a second rotational axis via the second bearing. One of the first or second bearing may thereby called hub bearing. An asymmetric hub according to this specification may be shaped and designed in different ways, one of which is shown referring to the figures. The skilled person however understands that various designs are possible without departing from the scope of the invention. As it is understandable all possible geometries cannot be described. The basic shape of such an asymmetric hub can however be described as a free-formed connection tube whereby end surfaces of such a free-formed connection tube are slightly angled and/or shifted.

### Brief Description of the Drawings

The present invention will now be described, for exemplary purposes, in more detail by way of an embodiment(s) and with reference to the enclosed drawings, in which:
- Fig. 1: schematically illustrates a perspective view of a principal sketch of a frameless parallel kinematic machine that illustrates why one of three universal gimbal joints needs to be able to at least partially tilt;
- Fig. 2a: schematically illustrates another perspective view of the principal frameless parallel kinematic machine of figure 1, albeit shown in a different position;
- Fig. 2b: schematically illustrates another perspective view of the principal frameless parallel kinematic machine of figure 1 in the same position as in figure 2a;
- Fig. 3a: schematically illustrates a perspective view of a principal sketch of a frameless parallel kinematic machine according to an embodiment of the invention;
- Fig. 3b: schematically illustrates a side view of the principal frameless kinematic machine of figure 3a;
- Fig. 4a: schematically illustrates another perspective view of the principal frameless parallel kinematic machine of figure 3a and 3b, albeit shown in a different position;
- Fig. 4b: schematically illustrates another perspective view of the principal frameless parallel kinematic machine of figure 3a in the same position as in figure 4a;
- Fig. 5: schematically illustrates a perspective view of a frameless parallel kinematic machine according to the invention;
- Fig. 6: schematically illustrates a perspective view of a frameless parallel kinematic machine according to the invention embedded on a base;
- Fig. 7: schematically illustrates a perspective view of the frameless parallel kinematic machine in a different position;
- Fig. 8: schematically illustrates a perspective view of a second universal gimbal joint and a second setting device of the frameless parallel kinematic machine;
- Fig. 9: schematically illustrates a perspective top-down view onto the embodiment of figure 8,
- Fig. 10: schematically illustrates a cross sectional view cut at the line X-X indicated in figure 9,
- Fig. 11: schematically illustrates another embodiment of the frameless parallel kinematic machine,
- Fig. 12a: schematically illustrates a second setting device and a second universal gimbal joint of the frameless parallel kinematic machine according to figure 11, and
- Fig. 12b: schematically illustrates a cross sectional view of the second setting device according to figure 12a.

### Detailed Description

Figure 1 illustrates a principle sketch of a design of frameless kinematic machine 100 comprising a first setting device 102a, a second setting device 102b and a third setting device 102c, each of them connected to a positioning platform 110 in a one-degree freedom rotation joint 111 via one of their ends. One-degree freedom rotation joint 111 in here means that the there is only one rotation axis provided in the joint. Each of the first, second and third setting devices 102a-c are also held at some position in between their ends via two-degree freedom joints, which means universal gimbal joints that allow rotation around two axis that are oriented perpendicular to one another. The first and third universal gimbal joints 104 are designed very similar and comprise a common outer gimbal axis 116' defined by first outer gimbal joints 116 and inner gimbal axes 134' defined by first inner gimbal joints 134. The inner gimbal axes 134' are oriented parallel to one another.

The second universal gimbal joint comprises a second outer gimbal axis 120' defined by the second outer gimbal joint 120 and a second inner gimbal axis 142' defined by the second inner gimbal joint 142. The common outer gimbal axis 116' and the second outer gimbal axis 120' are oriented parallel to one another. A distance, as measured orthogonal to both outer gimbal axes 116', 120', between these two axes can be chosen so as to provide different characteristics of the parallel kinematic machine 100. Basically, increasing the distance leads to increased stiffness at the cost of reach while decreasing the distance leads to a higher reach at the cost of stiffness. In addition to the second outer gimbal axis 120' and the second inner gimbal axis 142' the second universal gimbal joint needs an additional degree of freedom for the frameless kinematic machine 100 to work and not end up in a kinematic self-locking. This is illustrated by a third gimbal joint 144 defining a third gimbal axis 144'. This third gimbal joint 144 is allowing the second setting device 102b to tilt around its longitudinal axis which coincides with the third gimbal axis 144'.

The universal gimbal joints as illustrated in figure 1 can be positioned anywhere from one half (1/2), two thirds (2/3) to three quarters (3/4) of the length of any of the first to third setting devices 102a-c as seen from the positioning platform 110. This length measurement is based on the first to third setting devices 102a-c being in there retracted position. In other words, the universal gimbal joints are positioned in the half of the setting devices 102a-c that is arranged at a distance from the positioning platform 110, as measured along the length of the setting device 102a-c.

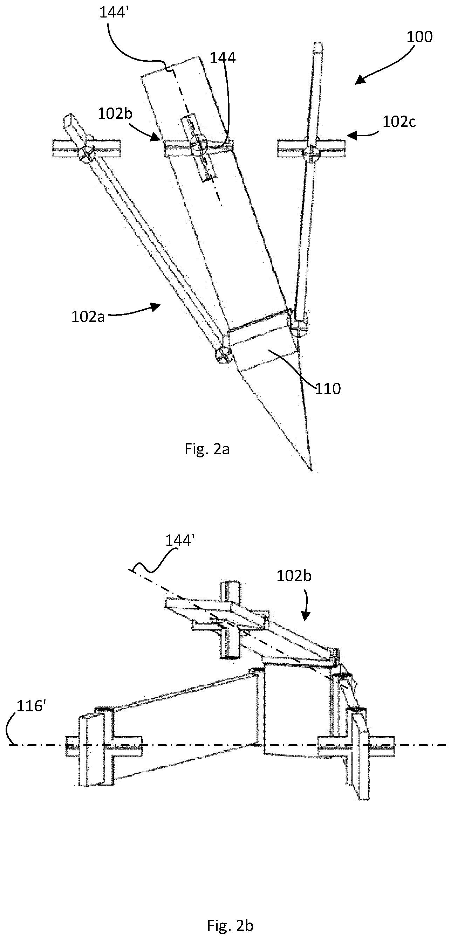

Figures 2a and 2b illustrated why a tilting movement of the second setting device 102b needs to be allowed for the frameless parallel kinematic machine 100 to be move freely and as desired.

In figure 2a the first setting device 102a is extended, the third setting device 102c retracted and the second setting device 102b slightly retracted, less than the third setting device 102c. This leads to a movement of the positioning platform 110 out of a central position as shown in figure 1. In order to be able to do this the second setting device 102b needs to be able to slightly tilt around the third gimbal axis 144' and the third gimbal joint 144. This also well illustrated in figure 2b, which shows a perspective top-down view onto the configuration of the frameless parallel kinematic machine 100 as shown in figure 2a. In figure 2b it is illustrated how the second setting device 102b needs to tilt around its longitudinal axis or third gimbal axis 144' when the positioning platform 110 is moved as illustrated in figures 2a and 2b, in order to avoid kinematic locking of the frameless parallel kinematic machine 100. In other words however, only one setting device 102a-c needs to be able to tilt for the frameless parallel kinematic machine 100 to work, in this case only the second setting device 102b.

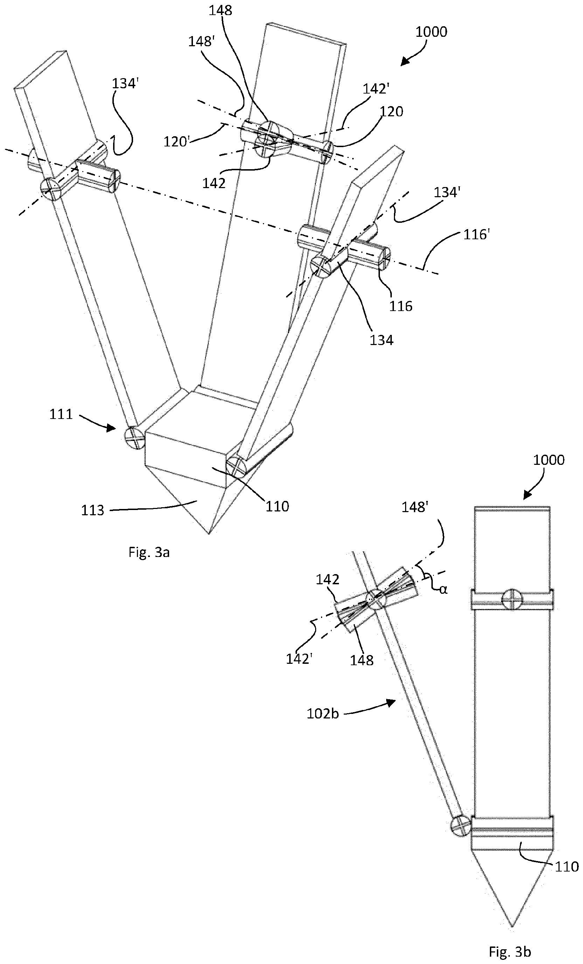

Figures 3a to 4b illustrate an illustrative example of a frameless parallel kinematic machine 1000 according to the invention, which explains the basic principle of the invention. Same reference numbers as in figures 1 to 2b refer to the same components and are herewith not described again. In figure 3a the part that is different from the previous embodiment is the second universal gimbal joint. While the second outer gimbal axis 120'/the second outer gimbal joint 120 and the second inner gimbal axis 142'/the second inner gimbal joint 142 are designed in the same way as in figures 1 to 2b, a hub gimbal joint 148 defining a hub axis 148' of the second universal gimbal joint is designed differently. As described later herein this hub axis 148' is designed to do a precession movement when it is combined or embedded within, on or at the second inner gimbal joint 142 or alternatively with the second outer gimbal joint 120. Such a combination allows the hub axis 148' to do a precession movement or gyrate, which in turn allows the second setting device 102b to tilt when the frameless parallel kinematic machine 1000 is moved or the position of the positioning platform 110 is adjusted. The positioning platform 110 is illustrated as comprising a tool head 113, which tool head 113 is only illustrated simplified. The tool head 113, may be a milling device, a drill, a turning/lather tool or any other suitable device for manufacturing. Since the hub gimbal joint or hub joint 148 is double embedded with two bearings, namely actual hub bearings (not shown in figure 3a) and bearings of the second inner gimbal joint 142, a tilting of the second setting device 102b is enabled. The second universal gimbal joint is explained in more detail later herein.

Figure 3b illustrates a side view of the frameless kinematic machine 1000 of figure 3a. The hub axis 148' of the hub joint 148 and the second inner gimbal axis 142' of the second inner gimbal joint 142 of the second setting device 102b are well visible and also the angle α between the hub axis 148' and the second inner gimbal axis 142'. As mentioned previously the hub axis 148' and hub joint 148, respectively, is embedded in the or at the second inner gimbal joint 142, which means that the hub axis 148' can rotate within the joint and therewith allowing tilting of the setting device 102b, without the need for complete third degree of freedom. The angle α is limited to certain maximum degree typically around 5° to 30°, preferably 5° to 20° and more preferably 10° to 20° in here also specified 15° to 17° or in a range from 15° to 17°. The hub axis 148' can however gyrate or follow a precession movement, whereby the precession movement is following the angle α. In other words, the hub axis 148' can basically gyrate at an angle α around the second inner gimbal axis 142'. Alternatively, it can gyrate around the second outer gimbal axis 120', depending on the construction and design of the second universal gimbal joint. This design and the construction as explained later herein, are beneficial in terms of stiffness and rigidity.

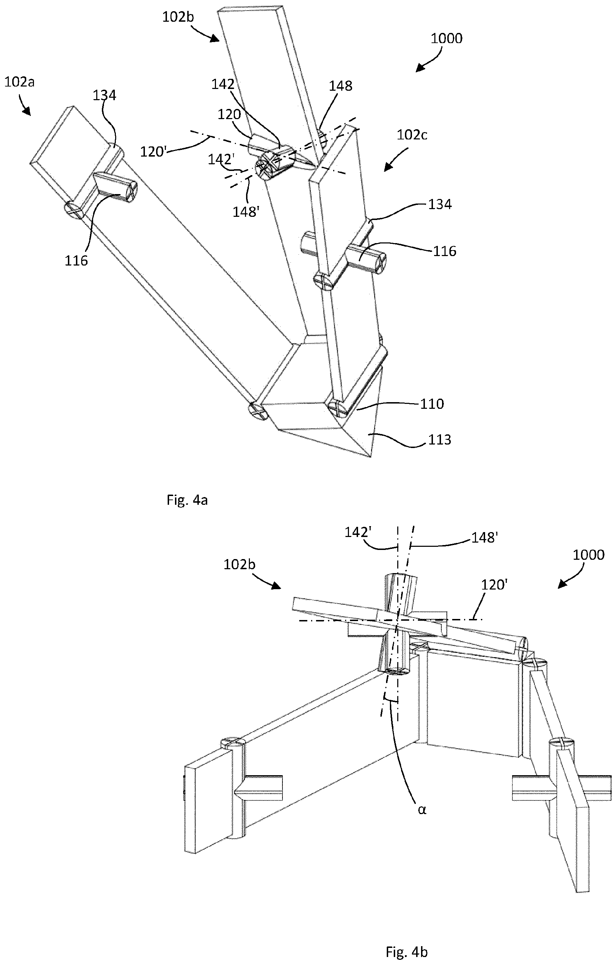

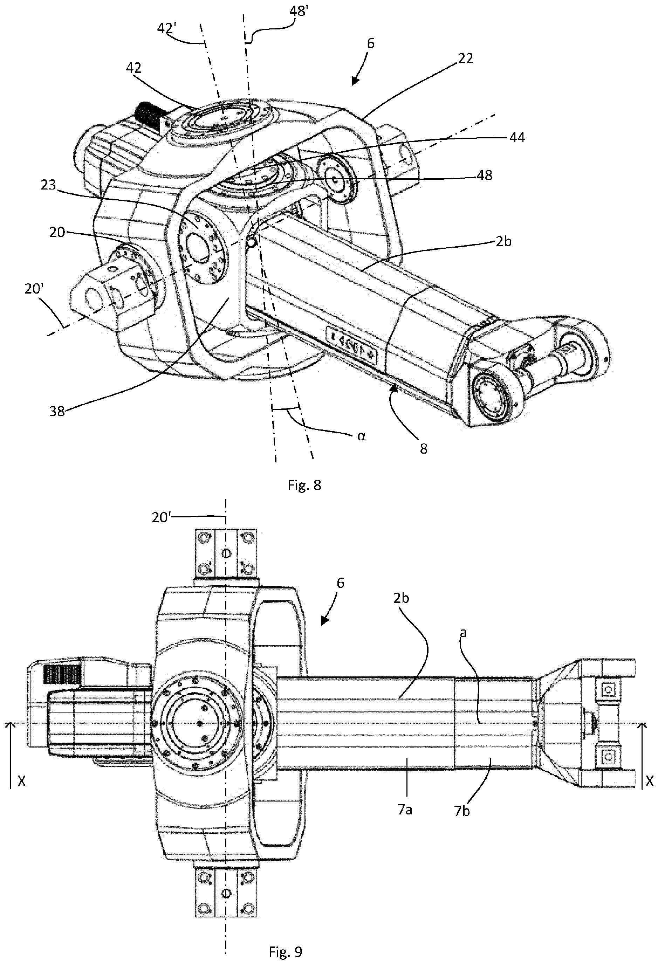

Turning now to figure 4a, it is illustrated how the frameless parallel kinematic machine 1000 is performing when the positioning platform 110 is moved. The movement illustrated in figure 4a is occurring when the first setting device 102a I extended, the second setting device 102b is retracted and the third setting device 102c is also retracted, slightly more than the second setting device 102b. This leads to a changed position of the positioning platform 110 and therewith the tool head 113. As can be seen from figure 4a, such a movement is allowed by the first gimbal joints 116 and the second inner gimbal joints 134 of the first and third setting device 102a, 102c. What is however well visible in figure 4a is the need for the second setting device 102b to be able to tilt so that there is not kinematic locking. This tilting and pivoting movement is enabled by the hub joint 148 and the hub axis 148' and the second inner gimbal axis 142' via the second inner gimbal joint 142, as disclosed in figures 8 to 10.

The tilting of the second device 102b is also well visible and illustrated in reference to figure 4b. Figure 4b is a perspective top-down view onto the frameless parallel kinematic machine 1000 and configuration of such a machine according to figure 4a. Also in this view it is well visible how the hub axis 148' in combination with the second inner gimbal axis 142' and the respective gimbal joint enables the second setting device 102b to make a pivoting movement and tilt at the same time. The angle α is also illustrated in figure 4b, whereby the angle α is the precession angle at which the hub axis 148' is doing a precession movement around the second inner gimbal axis 142'. The tilting may thereby take any angle from 0° up to α depending on the degree of pivot or rotation around the second inner gimbal axis 142'.

The above description of figures 3a to 4b describes inner and outer axis and so on. It is however to be noted that such inner or outer wording may be interchanged. The same can be said for the joint designs of the first, second and third universal gimbal joints.

Further in order to avoid confusion, the first, second and third universal gimbal joints 4, 4' and 6 have not been indicated with reference numbers in figures 1 to 4b. These universal gimbal joints are however indicated in the following figures, where another embodiment of the frameless parallel kinematic machine 1 is explained in more detail and in particular the second universal gimbal joint 6 is explained in more detail.

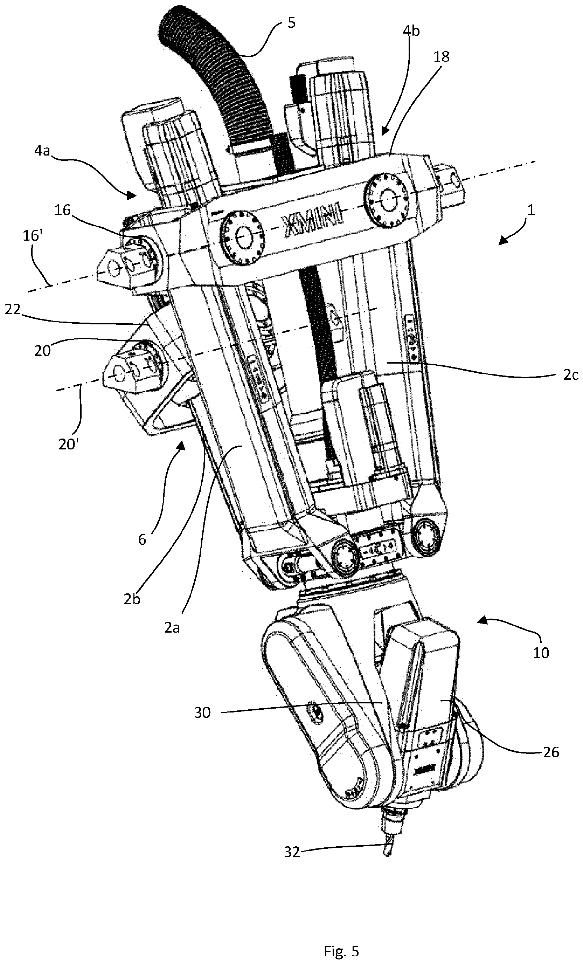

Figure 5, illustrates the frameless parallel kinematic machine 1 according to an embodiment of the present invention. The frameless parallel kinematic machine 1 comprises a first setting device 2a, a second setting device 2b and a third setting device 2c. The first-, second- and third setting devices 2a-2c are interconnected in a one-degree freedom joint to the positioning platform 10. At a distance from the positioning platform 10, the first-, second- and third setting devices 2a-2c are held in corresponding universal gimbal joints, namely a first universal gimbal joint 4a, a second universal gimbal joint 6 and a third universal gimbal joint 4b.

Each of the first setting device 2a, the second setting device 2b and the third setting device 2c can be extended and retracted/lengthened and shortened individually using a lengthening and shortening mechanism, which can be a motor and screw-nut-mechanism. It is to be noted that a lengthening or extension (and also a retraction) of one setting device may force the other setting devices to adapted accordingly, due to the common connection to the positioning platform 10.

Power and control is supplied to the positioning head 10 via a power and control supply line 5. The positioning platform 10 further comprises a tool head 26, a housing 30 and a spindle or tool 32. In the housing 30 a motor is embedded to power the spindle 32 and tool, respectively, with power supplied via the power and control supply line 5.

The first universal gimbal joint 4a and the third universal gimbal joint 4b are designed in a very similar manner. The first universal gimbal joint 4a and third universal gimbal joint 4b comprise a common outer gimbal holder 18 comprising outer bearings 16, which define a first outer gimbal axis 16' or common outer gimbal axis 16' around which the common outer gimbal holder 18 can rotate or pivot. The common outer gimbal holder 18 is shaped like a ring or a rectangular ring.

The second universal gimbal joint 6 comprises a gimbal holder 22 also in the from of a ring-shaped element, which gimbal holder 22 comprises outer bearings 20 that define a second outer gimbal axis 20' around which the gimbal holder 22 can rotate.

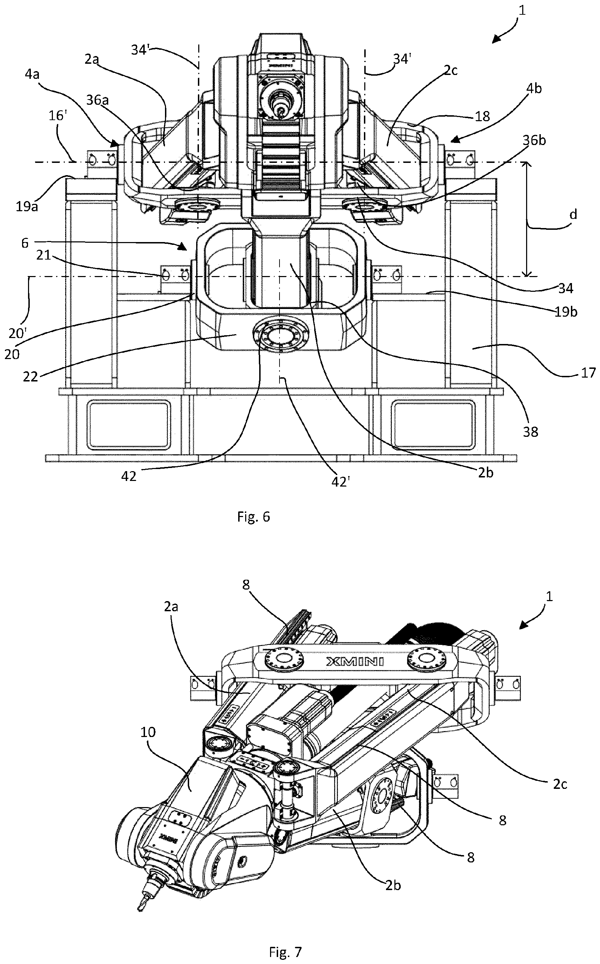

Figure 6 illustrates the frameless parallel kinematic machine 1 embedded on a base 17 via the first outer gimbal axis 16' and the second outer gimbal axis 20'. The first outer gimbal axis 16' and the second outer gimbal axis 20' are embedded on a first embedding surface 19a and on a second embedding surface 19b of the base 17. This may be done using a bearing protrusion 21 that is connected to respective first or second outer bearings 16, 20. As can be seen from figure 6, a distance d, as measured orthogonal, between the first outer gimbal axis 16' and the second outer gimbal axis 20' is given by the base 17, however the frameless construction of the frameless parallel kinematic machine 1 actually allows to vary this distance d by replacing the base, thereby increasing the flexibility of the frameless parallel kinematic machine 1. As mentioned earlier an increased distance increases stiffness and rigidity, while a shortened distance d increases reach of the frameless parallel kinematic machine 1.

In figure 6, the first setting device 2a, the second setting device 2b and the third setting device 2c are well visible and so are the first and third universal gimbal joints 4a, 4b and the second universal gimbal joint 6. The common outer gimbal holder 18 of the first and third universal gimbal joints 4a, 4b is visible and so is the first and third inner gimbal holders 36a, 36b that are embedded in the common outer gimbal holder 18 via inner bearings 34, that define a first inner gimbal axis 34'.

Figure 6 is also well illustrating the second universal gimbal joint 6 comprising the second outer gimbal holder 22 comprising outer bearings 20, defining the second outer gimbal axis 20'. In the second outer gimbal holder 22, the gimbal element 38 or inner gimbal holder 38 is embedded via inner bearings 42, that define a second inner gimbal axis 42'. The second inner gimbal axis 42' is oriented perpendicular to the second outer gimbal axis 20'.

Figure 7 illustrates the frameless parallel kinematic machine 1 without a base but in a different position from figures 5 and 6. Each of the first-, second- and third setting device 2a-2c comprises a reinforcing beam 8, designed to increase stiffness and rigidity of the frameless parallel kinematic machine. The first setting device 2a is retracted and the third setting device 2c extended while the second setting device 2b is also extended but slightly less than the third setting device 2c. This different lengths of the first-, second- and third setting device 2a, 2b, 2c result in a moved positioning platform 10 out of its neutral position, in which neutral position each of the first, second and third setting device 2a, 2b, 2c are having the same length. It is however to be noted that there may be several neutral positions depending on the chosen length of the setting devices 2a-2c. The second setting device 2b is slightly tilted and this mechanism will now be explained referring to figures 8 to 10.

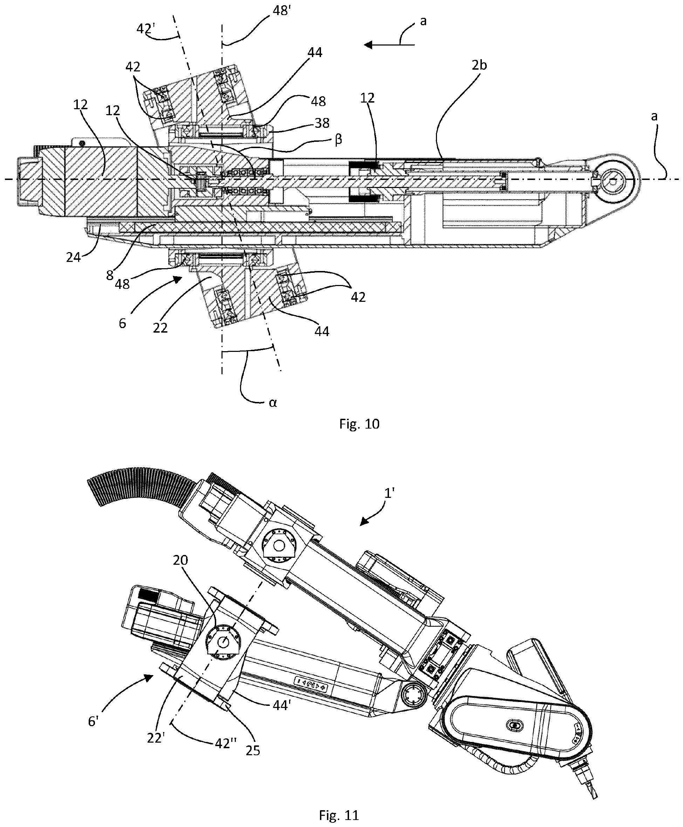

Figure 8 illustrates the second universal gimbal joint 6 and the second setting device 2b according to an embodiment of the invention. The second setting device 2b comprises the reinforcing beam 8 and is held in the gimbal element 38, which is in the embodied as a ring or sleeve. The second setting device is fixedly connected to the gimbal element 38 via connections 23. The second universal gimbal joint 6 further comprises a hub 44 and hub bearings 48, which define a hub axis 48'. In the illustrated embodiment a pair of hubs 44 and a pair of hub bearings 48 are used to embedded and hold the gimbal element 38. The hub 44 is embedded with one end via the hub bearings 48 in the gimbal element 38 and with the other end via second inner bearings 42, defining a second inner gimbal axis 42' in the second outer gimbal holder 22. The second inner bearings 42 may be a pair of second inner bearings 42 for each embedding in the second outer gimbal holder 22 in order to increase stability. This is well visible and illustrated in figure 10. The second outer gimbal holder 22 further comprises outer bearings 20 defining the second outer gimbal axis 20'.

The second outer gimbal axis 20' and the second inner gimbal axis 42' are oriented perpendicular to one another while the hub axis' 48' is designed to gyrate around the second inner gimbal axis 42', typically for the application illustrated about 40° to 80° degrees, and more preferably about 50° to 70° degrees. This results in an angle α between the second inner gimbal axis 42' and the hub axis 48' that can vary between 0° up to about 20°, 18°, or about 15°, depending on the rotation of the second setting device 2b around the second inner gimbal axis 42'.

The hub 44 or pair of hubs 44 is designed asymmetric so that the second inner gimbal axis 42' and the hub axis 48' are not oriented parallel but at an angle α to one another. The hub axis 48' is following a precession movement around the second inner gimbal axis 42' at an angle α. This means that the second setting device 2b can tilt from 0° to α around its longitudinal axis or direction a (c.f. figure 9) and depending on the rotation around the second inner gimbal axis 42' and due to the connection of all three setting devices 2a-2c to the positioning platform 10 (not shown in figure 8). In figure 8, the second setting device 2b is however not tilted but in a straight position in which the angle between the hub axis 48' and the second inner gimbal axis 42' align with one another as seen along the longitudinal direction a (c.f. figure 9) of the second setting device 2b.

Figure 9 illustrates the second setting device 2b and the second universal gimbal joint 6 in a perspective side view. It can be seen how two telescopic elements of the second setting device 2b can move inwards and outwards in order to retract and extend the second setting device 2b.

Turning to figure 10, which illustrates a cross sectional view cut through the second setting device 2b and the second universal gimbal joint 6 at the line X-X of figure 9. In figure the reinforcing beam 8 is illustrated. The reinforcing beam 8 is designed to glide in a linear bearing 24 of the second setting device 2b. The second setting device further comprises a motor- screw- nut mechanism 12 for retracting and extending the second setting device 2b. The linear bearing 24 is designed using rails in which cut outs of the reinforcing beam 8 can slide during retraction and extension of the second setting device 2b. It is to be noted that the motor-, screw-, nut mechanism 12, the linear bearing 24 and the reinforcing beam 8 design is similar or the same in all of the first-, second- and third setting devices 2a-2c.

Figure 10 further illustrates how the hub axis 48' and the second inner gimbal axis 42' enclose an angle a, which in this view corresponds to a maximum angle, that may be anything from 10° to 30°, depending on the chosen configuration. Preferably the angle α may be around 12° to 20° and more preferably about 14° to 18°. However, as the reader will understand when looking at the hub axis 48' and the second inner gimbal axis 42' along the arrow a, the angle α would be 0° and as the view rotates around the second inner gimbal axis 42' such an angle would increase until it reaches it maximum value in the illustrated cross-sectional view in figure 10.

Figure 10 further illustrates the pair of hubs 44 embedded in the second outer gimbal holder 22 with a pair of second inner bearings 42 and a single bearing (per hub 44) in the gimbal element 38. Having a pair of second inner bearings 42 increases stiffness and rigidity of the entire frameless parallel kinematic machine 1. It is however also possible to have a single second inner bearing 42 embedded in the second outer gimbal holder 22 of the second universal gimbal joint 6.

As can be seen from figure 10, the hubs 44 are designed as asymmetric and slightly shifted free-formed connection tube or cut cones. The second inner bearings 42 and the hub bearings 48 are arranged shifted and inclined versus one another in order to provide the inclination between the second inner gimbal axis 42' and the hub axis 48'. The skilled person will understand that this is very advanced and engineered design and that the hubs 44 may be designed differently as long as they provide two embeddings for bearings that are inclined and offset versus one another. It can however be noted that the hubs 44 are designed the same way, thus congruent, they are just mounted minor inverted.

Further it is to be noted that the hub axis 48' and the second inner gimbal axis 42' intersect at a point that corresponds to a tilting point of the longitudinal direction a of the setting device 2b. The tilting point may thus be chosen to be arranged on a central axis a or longitudinal axis a of the second setting device 2b.

The hubs 44, the gimbal holders 18, 22 and the inner gimbal holders 36a,36b and the gimbal element 38 may further be made of a metal, cast iron, steel or titan alloy to further increase stiffness and rigidity.

In figure 10 the initial position of the second universal gimbal joint 6 is further illustrated. In this initial position the hub axis 48' and the second inner gimbal axis 42' intersect at an acute angle, which is typically 10° to 20°, preferably about 15° to 19°., more preferably 15° to 17° If figure 10 is compared to figure 3b it can be seen that the second inner gimbal axis 42' is tilted backwards away from the positioning platform (c.f. figure 3b) and thus includes an obtuse angle β with a longitudinal axis a defined by the setting device 2b.

The obtuse angle β is formed on the side of the setting device 2b that is directed towards the positioning platform (c.f. figure 3a or 4a).

Such a configuration will induce and produce a rotational movement of about +/-60° into the hubs 44 and therewith the hub axis 48' will follow a precession movement around about 60° so that the second setting device 2b can tilt about its longitudinal axis a. It is however a constant aim to reduce the rotation in the hubs 44 in order to increase stiffness and rigidity.

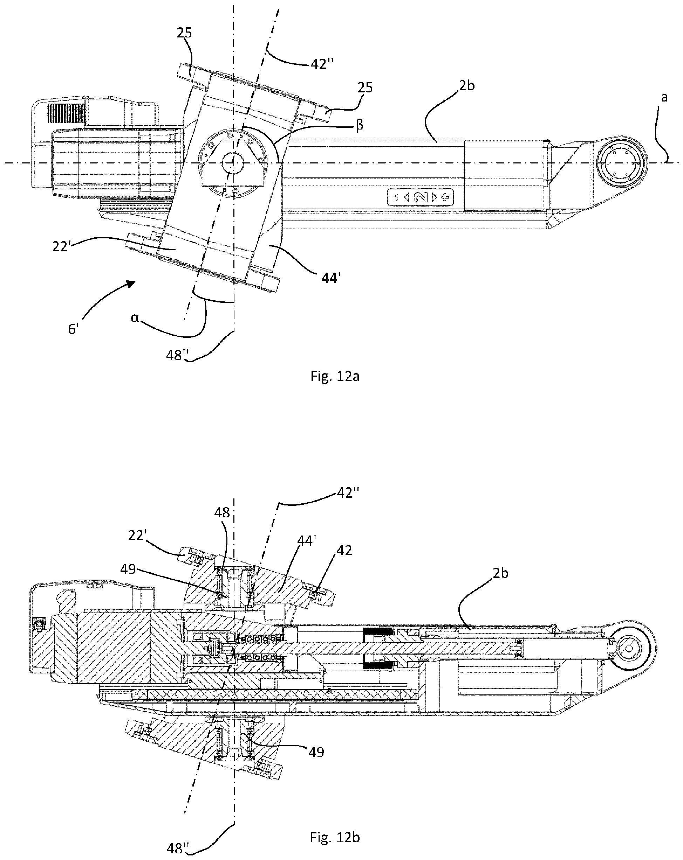

Turning now to figures 11, 12a and 12b, it is explained how the design of the second universal gimbal joint 6 can be embodied in an even more advantageous solution.

Figure 11 illustrates another embodiment of the frameless parallel kinematic machine 1' having a differently designed second universal gimbal joint 6'. The gimbal holder 22' is designed as a sleeve and different from the gimbal holder 22 illustrated previously. The gimbal holder 22' of this embodiment comprises flanges 25 so that the gimbal holder 22' can hold a hub sleeve 44'. The hub sleeve 44' is designed as an asymmetric sleeve and will be explained later herein. The hub sleeve 44' is embedded in the gimbal holder 22' via inner bearings 42 defining the second inner gimbal axis 42". The outer bearings 20 are designed similar to other embodiments and so is the orientation of the second outer gimbal axis (not illustrated in figure 11).

The second universal gimbal joint 6' is now further explained referring to figures 12a and 12b. In figure 12a the setting second device 2b' according to a further embodiment is illustrated comprising a second universal joint 6' comprising the gimbal holder 22' with the flanges 25 and the asymmetric hub sleeve 44' being embedded within the gimbal holder 22' using hub bearings 48 thereby defining a hub axis 48".

The orientation of the gimbal holder 22' and the asymmetric hub sleeve 44' are chosen so that the second inner gimbal axis 42" includes an acute angle β with the longitudinal axis a and towards the positioning platform (not shown in figure 12a).

The angle α between the hub axis 48" and the second inner gimbal axis 42" is more or less the same as specified above, thus about 10° to 30°, depending on the chosen configuration. Preferably the angle α may be around 12° to 20° and more preferably about 14° to 18°.

Having the described configuration of the angle α and the angle β being an acute angle, in an initial position of the second setting device 2b, and therewith in an initial position of the frameless parallel kinematic machine 1 allows to reduce the rotation or precession rotation of the hub axis 48" to a few degrees compared to the approximately 60° degrees of rotation when the angle β is chosen to be designed as an obtuse angle β.

Having only a few degrees of rotation in the hub axis 48" and thus only a small precession movement of it substantially increases rigidity, speed and acceleration due to smaller or shorter movements and enhances therewith precision.

The initial position is basically a position where all three setting devices 2a, 2b, 2c have the same length and thus the positioning platform is a centralized position. This is true for all embodiments disclosed herein.

Figure 12b illustrates a cross sectional view cut through the second setting device 2b along line X-X of figure 9 but this time with the modified universal gimbal joint 6'. From figure 12b it is visible that the gimbal holder 22' is designed as a gimbal sleeve or ring and that it holds or embeds the inner bearings 42, which inner bearings 42 hold and rotationally embed the asymmetric hub sleeve 44'.

The asymmetric hub sleeve 44' is designed in a Z-shape and it holds the second setting device 2b via the hub bearings 48, which are embodied as pair of hub bearings 48. From the hub bearings 48, axle elements 47, which are embedded in the asymmetric hub sleeve 44', extend and hold the second setting device 2b.

Such an embedding and design allows the second setting device 2b to tilt and adapted when the positioning platform is moved by extending and extracting any or all or just some of the first-, second- and/or third setting devices 2a, 2b, 2c.

As mentioned previously the terms outer and inner herein may be interchanged. In addition, the hubs (not shown) may sit between the outer bearings 20 and the second outer gimbal holder 22.

Any gimbal holder or gimbal element disclosed herein may be embodied as a gimbal ring or gimbal sleeve or the like.

Further also the outer bearings may be embodied as a pair of bearings for each side.

## Claims

1. A frameless parallel kinematic machine (1) comprising:
- a positioning platform (10) with a tool head (26) that is rotatable and pivotable versus the positioning platform (10),
- first, second and third setting devices (2a-2c), each of the first, second and third setting devices (2a-2c) comprising a reinforcing beam (8) and a mechanism (12) for extending and retracting the setting device (2a-2c) individually along a longitudinal direction (a) of the corresponding setting device (2a-2c), each of the first, second and third setting devices (2a-2c) being connected to the positioning platform (10) with one end in a one-degree freedom rotational manner, thereby forming a tripod design,
- first and a third universal gimbal joints (4a, 4b) comprising a common outer gimbal holder (18) having outer bearings (16), inner bearings (34) and a first inner gimbal holder (36a) and a third inner gimbal holder (36b) each holding the corresponding first setting device (2a) and third setting device (2c), respectively, wherein the outer bearings (16) are embedded in the common outer gimbal holder (18) defining a first outer gimbal axis (16'), the first and third inner gimbal holders (36a, 36b) being individually embedded in the common outer gimbal holder (18) via the inner bearings (34) defining a first and third inner gimbal axis (34') oriented parallel to one another but perpendicular to the first outer gimbal axis (16'),
**characterized by** further comprising a second universal gimbal joint (6, 6') having outer bearings (20), a gimbal holder (22, 22'), inner bearings (42), a gimbal element (38), hub bearings (48) and a hub (44, 44'), wherein the outer bearings (20) are embedded in the gimbal holder (22, 22') defining a second outer gimbal axis (20') and wherein the inner bearings (42) are embedded in the gimbal holder (22, 22') defining a second inner gimbal axis (42', 42") oriented perpendicular to the second outer gimbal axis (20'), wherein the hub (44) is connected to the gimbal element (38) via the inner bearings (42), the hub (44) further comprising the hub bearings (48), the hub (44, 44') being designed so that the hub bearings (48) define a hub axis (48', 48") that is oriented at an angle α to the second inner gimbal axis (42') and wherein the second setting device (2b) is connected to the hub (44) via the hub bearings (48).

2. The frameless kinematic machine according to claim 1, wherein a maximum value of the angle (α) fulfils 1° < α < 45° and preferably 10° < α < 20°.

3. The frameless kinematic machine according to claims 1 or 2, wherein the first outer gimbal axis (16') and the second outer gimbal axis (20') are oriented parallel to one another.

4. The frameless kinematic machine according to any of the previous claims, wherein the hub axis (48', 48") and the second inner gimbal axis (42', 42") intersect at a point that corresponds to a tilting point of the longitudinal direction (a) of the second setting device (2b).

5. The frameless kinematic machine according to any of the previous claim 1 to 4, comprising a pair of hubs (44) and corresponding hub bearings (48) for embedding the second setting device (2b) in the gimbal holder (22).

6. The frameless kinematic machine according to any of the previous claims 1 to 5, wherein the gimbal element (38) and the hub (44, 44') are integrally formed as an asymmetric hub sleeve (44') embedded in the gimbal holder (22') and wherein the hub bearings (48) are embedded in the asymmetric hub sleeve (44').

7. The frameless kinematic machine according to the previous claim, wherein the asymmetric hub sleeve (44') is designed as a Z-shaped asymmetric hub sleeve (44').

8. The frameless kinematic machine according to the previous claim, wherein, in an initial position in which the first, second and third setting devices (2a-2c) have a similar or same length, the second inner gimbal axis (42") forms an acute angle (β) with the longitudinal axis (a) of the second setting device (2b), towards a side on which the positioning platform (10) is connected to the second setting device (2b).

9. The frameless kinematic machine according to any of the previous claims, wherein the inner bearings (42) of the second universal gimbal joint (6) are designed as a pair of inner bearings (42).

10. The frameless kinematic machine according to any of the previous claims, wherein the hub bearings (48) are designed as a pair of hub bearings (48).

11. The frameless kinematic machine according to any of the previous claims, wherein each of the first-, second-, and third setting devices (2a-2c) comprises a linear bearing (24) and a reinforcing beam (8) designed to slide in the linear bearing (24) upon retraction or extension of the corresponding setting device (2a-2c).

12. The frameless kinematic machine according to any of the previous claims, wherein the mechanism for extending and retracting the setting device individually, is a motor and screw-nut mechanism (12).

13. The frameless kinematic machine according to any of the previous claims, wherein the hub (44) is designed as an asymmetric hub (44) and wherein the asymmetric hub in combination with the inner bearings (42) and the hub bearings (48) defines a first axis of rotation and a second axis of rotation, wherein the first axis of rotation corresponds to the second inner gimbal axis (42') and the second axis of rotation to the hub axis (48').

14. The frameless kinematic machine according to any of the previous claims, wherein the hub (48) is designed as a pair of hubs (44) comprising a pair of hub bearings (48), the pair of hubs being embedded in the gimbal element (38) and configured to hold the second setting device (2b).

15. The frameless kinematic machine, wherein the gimbal holder (22), the gimbal element (38), the hub(s) (44), the common outer gimbal holder (18) and first and third inner gimbal holders (36, 36b) are made of a strong and rigid material, such as aluminium, steel, iron or cast iron or any suitable metal alloy.

16. The frameless kinematic machine, wherein at least parts of the first, second and third setting devices (2a-2c) and in particular the reinforcing beams (8) are made of carbon fibre composite material.

17. The frameless kinematic machine, wherein the common outer gimbal holder (18) is designed as a gimbal ring or gimbal sleeve.
